# EUROPÄISCHE PATENTSCHRIFT

(11) **EP 3 056 260 B1**
(45) Veröffentlichungstag und Bekanntmachung des Hinweises auf die Patenterteilung: **12.02.2020**
(21) Anmeldenummer: 15155179.3
(22) Anmeldetag: 16.02.2015
(51) Int. Cl.: B01D 67/00, B01D 71/80

(54) **Verfahren zur Herstellung einer Trennmembran sowie mit dem Verfahren herstellbare Trennmembran**
Method for producing a separating membrane and separating membrane that can be produced by said method
Procédé de fabrication d'une membrane de séparation et membrane de séparation fabriquée selon ledit procédé

(43) Veröffentlichungstag der Anmeldung: 17.08.2016
(73) Patentinhaber: Helmholtz-Zentrum Geesthacht Zentrum für Material- und Küstenforschung GmbH, 21502 Geesthacht (DE)
(72) Erfinder: Hahn, Janina, 22941 Jersbek (DE); Clodt, Juliana Isabel, 22117 Hamburg (DE); Abetz, Clarissa, 21335 Lüneburg (DE); Filiz, Volkan, 22763 Hamburg (DE); Abetz, Volker, 21335 Lüneburg (DE)
(74) Vertreter: Gulde & Partner

(56) Entgegenhaltungen:
- EP-A1- 2 695 669
- EP-A1- 2 826 815
- WO-A1-2011/098851
- WO-A2-2012/151482
- DE-A1-102006 045 282
- DE-A1-102012 207 344
- US-A1- 2009 239 381
- MICHAEL D DIMITRIOU ET AL: "Amphiphilic block copolymer surface composition: Effects of spin coating versus spray coating", POLYMER, ELSEVIER SCIENCE PUBLISHERS B.V, GB, Bd. 53, Nr. 6, 26. Dezember 2011 (2011-12-26), Seiten 1321-1327, XP028462367, ISSN: 0032-3861, DOI: 10.1016/J.POLYMER.2011.12.055 [gefunden am 2012-01-26]
- RANGOU S ET AL: "Self-organized isoporous membranes with tailored pore sizes", JOURNAL OF MEMBRANE SCIENCE ELSEVIER SCIENCE B.V. NETHERLANDS, Bd. 451, 1. Februar 2014 (2014-02-01), Seiten 266-275, XP002742507, ISSN: 0376-7388

## Beschreibung

Die Erfindung betrifft ein Verfahren zur Herstellung einer Trennmembran, insbesondere einer Ultrafiltrationsmembran.

### STAND DER TECHNIK

Trennmembranen dienen der physikalischen Trennung von Stoffgemischen, wobei eine Fraktion, das Retentat, auf der Membranoberfläche zurückgehalten wird und die andere Fraktion als so genanntes Permeat die Poren der Membran passiert. Es werden Filtrationsmembranen (speziell Mikrofiltrations-, Ultrafiltrations- oder Nanofiltrationsmembranen) und Pervaporationsmembranen unterschieden. Bei den Filtrationsmembranen werden Substanzen aufgrund ihrer Größe aus einem zumeist flüssigen Medium abgetrennt. So trennen Ultrafiltrationsmembranen (UF-Membranen) Partikel oder makromolekulare Substanzen mit Partikeldurchmessern im Bereich von 0,01 bis 0,1 µm ab, während bei der Nanofiltration Partikel oder Moleküle mit Durchmessern von 0,001 bis 0,01 µm (1 bis 10 nm) abgetrennt werden. Zu diesem Zweck weisen die Filtrationsmembranen entsprechend dimensionierte Porendurchmesser auf. Nanofiltrationsmembranen trennen auch zwei flüssige Medien voneinander. Trennmembranen werden neben keramischen Werkstoffen heute überwiegend aus Polymeren hergestellt. Häufig liegt die trennaktive Polymermembranschicht auf einem stabilisierenden makroporösen Trägermaterial (oder Trägersubstrat) vor, d.h. die Gesamtstruktur verfügt über eine asymmetrische Porenstruktur.

Die Selektivität sowie der Fluss sind bedeutende Eigenschaften, die zur Kennzeichnung der Leistung von Filtrationsmembranen herangezogen werden. Über die Lebensdauer einer Membran wird ihre Effizienz durch Foulingprozesse, also der Bildung von Fremdschichten auf der Membran, sowie durch die Kompaktierung der Membranstruktur beeinträchtigt. Entscheidend für den großtechnischen Einsatz sind zudem Material- und Herstellungskosten, die Produktion unter dem Aspekt der Nachhaltigkeit, die Stabilität und Lebensdauer der Membran.

Ziel der Filtrationsmembranentwicklung, insbesondere von UF-Membranen, ist die Realisierung einer maximalen Trennschärfe bei maximalen Flussraten. Um dies zu erreichen, wird einerseits eine möglichst enge Porengrößenverteilung angestrebt, idealerweise Isoporosität. Hohe Flussraten werden hingegen durch eine hohe Porosität bei geringen Membranwiderständen, also geringen Dicken, erhalten. Die Herausforderung ist, diese Eigenschaften in einer Membran zu vereinen, die zudem in einem einfachen, schnellen und kostengünstigen Prozess hergestellt werden kann.

Derzeit kommerziell erhältliche isoporöse UF-Membranen umfassen Membranen aus anodischem Aluminiumoxid (AAO-Membranen), mesoporöse Silikamembranen sowie isoporöse Kernspurmembranen. AAO-Membranen werden in einem aufwändigen elektrochemischen Prozess hergestellt, der schwer skalierbar ist. Die erhaltenen Membranen sind zudem sehr brüchig. Auch das für die Herstellung der mesoporösen Silikamembranen eingesetzte Templatverfahren ist aufwändig. Zur Herstellung von isoporösen Kernspurmembranen wird eine Polymerfolie (insbesondere PTFE oder PC) mit schweren Ionen beschossen. Hierbei entstehen symmetrische Membranen, bei denen also die gesamte Schichtdicke zum Membranwiderstand beiträgt. Die Schichtdicken werden typischerweise in einem Bereich 6 bis 10 µm angegeben. Die Kernspurmembranen besitzen eine geringe Porosität und somit eine geringe Flussrate. Zudem kann im Herstellungsprozess das Zusammenwachsen einzelner Poren nur schwer vermieden werden.

### Isoporöse Blockcopolymermembranen durch selektive Ätz-, Lösungs- oder Quellprozesse

Es ist bekannt, isoporöse Membranen aus amphiphilen Blockcopolymeren, die also zumindest einen hydrophilen und einen lipophilen Polymerblock aufweisen, aus Lösung herzustellen. Dabei findet eine Selbstorganisation des Blockcopolymers statt, welche auch durch die Wahl des Lösungsmittels und kontrollierter Lösungsmittelverdampfung beeinflusst wird. Anschließend wird der porenbildende Block selektiv entfernt, beispielsweise durch einen selektiven Ätz- oder Ausspülprozess, wodurch es zur Porenbildung kommt. Die Herstellung erfordert zumeist einen Transferschritt der so gebildeten Membranschicht auf einen porösen Träger. Das Verfahren ist somit langwierig und aufwändig sowie schwer hochskalierbar.

Weiterhin kann eine Porenbildung erfolgen, indem die selbstorganisierte und getrocknete Blockcopolymerschicht in ein Lösungsmittel überführt wird, das selektiv nur einen der Polymerblöcke quillt, und anschließend erneut getrocknet wird. Es handelt sich um eine quellungsinduzierte Porenbildung (Z. Wang, X. Yao, W. Wang, J. Mater. Chem. 22 (2012), 20542-20548; E. Kim, W. Kim, K.H. Lee, C.A. Ross, J.G. Son, Adv. Funct. Mater. 24 (2014), 6981-6988).

US 2009/239381 A1 beschreibt ein Verfahren zur Herstellung eines porösen Films, bei dem ein Polymerblend eines AB-Blockcopolymers mit einem wasserunlöslichen Block A und einem wasserlöslichen Block B und eines wasserlöslichen Homopolymers B' verwendet zu einem Film ausgebildet und getrocknet wird. Dabei ergibt sich eine selbstorganisierte Struktur, bei der die wasserlöslichen Anteile B und B' Säulenstrukturen ausbilden, die den Film durchsetzen. Anschließend erfolgt der selektive Lösungsprozess, bei dem der Polymerfilm mit Wasser behandelt wird, wobei das Homopolymer B' gelöst und aus den Säulenstrukturen unter Erhalt von Poren ausgewaschen wird.

### Isoporöse Blockcopolymermembranen durch Phaseninversion

Einen sehr schnellen und effizienten Zugang zu isoporösen Membranen bietet die Kombination aus Selbstorganisation amphiphiler Blockcopolymere nach Ausstreichen einer konzentrierten Polymerlösung und der Nicht-Lösungsmittel-induzierten Phaseninversion. Die offenen Poren werden direkt im Prozess der Phaseninversion gebildet. Das Verfahren führt jedoch zu hohen Schichtdicken und erfordert große Mengen des teuren Blockcopolymers.

DE 10 2006 045 282 A1 beschreibt ein Verfahren zur Herstellung einer isoporösen Membran, bei dem eine vergleichsweise konzentrierte Gießlösung, die ein Blockcopolymer in einem Lösungsmittel oder Lösungsmittelgemisch enthält (5-30 Gew.-% Polymer in DMF, NMP, DMSO, DMAc oder THF), zu einem Film ausgestrichen wird und anschließend das Polymer in einem Nicht-Lösungsmittel für das Blockcopolymer durch Phaseninversion ausgefällt wird. Auf diese Weise wird eine asymmetrische Membran erhalten, die eine ungeordnete poröse Trägerstruktur und eine hochgeordnete nanoporöse Trennschicht aufweist.

In einer Weiterentwicklung zu der vorstehend beschriebenen Methode lehrt WO 2011/098851 A1, der Gießlösung Salze von Cu, Co, Ni, Fe, Ag, Zn, Pd, Pt, Au, Cr, Ru, Zr, Mo, Ti, Al oder Cd zuzusetzen, die in der Lage sind, Komplexe mit mindestens einem Polymerblock des Blockcopolymers zu bilden. Durch das Metallsalz konnte die Isoporosität der Trennschicht deutlich erhöht werden. Es werden Membrane mit einer Schichtdicke von mindestens 50 µm, insbesondere um 200 µm erhalten.

EP 2 695 669 A1 beschreibt eine weitere Abwandlung des Verfahrens, bei dem die Gießlösung neben dem Blockcopolymer (10-40 Gew.-%) ein gelöstes Kohlenhydrat aufweist.

Aus WO 2012/151482 A2 ist die Herstellung eines isoporösen Multiblock-Copolymerfilms bekannt, wobei eine Kombination einer kontrollierten Lösungsmittelverdampfung und einer Nicht-Lösungsmittel-induzierten Phaseninversion angewandt wird.

### Blockcopolymerschichten mit Sprühverfahren

Es ist ferner bekannt, Sprühverfahren zur Herstellung dünner Schichten aus orientierten Blockcopolymeren herzustellen, die jedoch keine offene Porenstruktur aufweisen und somit nicht als Trennmembranen einsetzbar sind. Beispielsweise wurde die Methode des Elektrosprühens zur Herstellung geordneter Schichten mit Dicken von etwa 100 nm aus Poly(styrol-*block*-4-vinylpyridin) oder Poly(styrol-*block*-ethylenoxid) aus verdünnten Polymerlösungen beschrieben (H. Hu, J.P. Singer, C.O. Osuji, Macromolecules 47 (2014), 5703-5710; H. Hu et al., ACS Nano 7(4) (2013), 2960-2970).

Ferner wurden durch Sprühen mittels Airbrush geordnete Blockcopolymerschichten auf Glassubstraten erzielt und diese mit entsprechenden mittels Spin-coating hergestellten Schichten verglichen (M.D. Dimitriou et al, Polymer 53 (2012), 3121-1327). Auch hier wurden keine offenen Porenstrukturen erzielt. Zudem erfolgt die Herstellung auf dichten Trägermaterialien. Das Verfahren den Spin-coatings lässt sich außerdem nicht im großtechnischen Maßstab anwenden.

### ZUSAMMENFASSUNG DER ERFINDUNG

Der Erfindung liegt daher die Aufgabe zugrunde, ein Verfahren zur Herstellung einer Trennmembran zur Verfügung zustellen, das Trennmembranen mit einer hohen Trennschärfe bei einer hohen Flussrate hervorbringt. Das Verfahren sollte idealerweise schnell und kostengünstig ausführbar sein und sich für die großtechnische Produktion eignen.

Diese Aufgaben werden vollständig oder zumindest teilweise durch ein Verfahren mit den Merkmalen des Anspruchs 1 gelöst. Weitere vorteilhafte Ausgestaltungen der Erfindung sind Gegenstand der Unteransprüche.

Das erfindungsgemäße Verfahren zur Herstellung einer Trennmembran umfasst zumindest die Schritte:
- Bereitstellen einer Polymerlösung mindestens eines amphiphilen Blockcopolymers in einem Lösungsmittel für das Blockcopolymer, wobei die Polymerlösung ein Polymergehalt im Bereich von 0,2 bis 3 Gew.-% aufweist und nur ein einziges Lösungsmittel enthält und das Lösungsmittel Dimethylformamid, Sulfolan, Dimethylacetamid, N-Methylpyrrolidon, Dimethylsulfoxid oder Dioxan ist,
- Ausbilden eines Films aus der Polymerlösung auf einem Trägersubstrat, wobei das Ausbilden des Films durch ein Sprühverfahren, ein Druckverfahren oder ein auf Kapillareffekten beruhendes Verfahren erfolgt, und
- Phaseninversion des Films durch Inkontaktbringen des Films mit einem Nicht-Lösungsmittel für das Blockcopolymer, wobei Poren ausgebildet werden und eine auf dem Trägersubstrat angeordnete trennaktive Schicht erhalten wird, und wobei das Verfahren keinen weiteren Schritt zur Porenerzeugung umfasst.

Das Verfahren zeichnet sich einerseits dadurch aus, dass das Ausbilden des Films aus der Lösung durch ein Sprühverfahren, ein Druckverfahren oder ein auf Kapillareffekten beruhendes Verfahren erfolgt.

Sämtlichen dieser Techniken zur Ausbildung eines Films ist gemein, dass sie sehr verdünnte Polymerlösungen einsetzen und die Ausbildung sehr dünner Filme und somit die Darstellung sehr dünner Membranschichten erlauben. Da der Membranwiderstand direkt von der Membrandicke abhängt, werden durch das Verfahren hohe Flussraten erzielt. Gleichzeitig zeichnet sich das Verfahren durch einen sehr geringen Verbrauch der oft teuren Blockcopolymere aus, wodurch das Verfahren kostengünstig umzusetzen ist. Durch die erstmalig eingesetzte Kombination der genannten Auftragungsverfahren mit einem Phaseninversionsprozess werden zudem poröse Membranen mit einer engen, idealerweise isoporösen, Porengrößenverteilung erhalten. Dabei werden die Poren direkt im Prozess gebildet, das heißt es ist kein zusätzlicher Schritt zur Porenerzeugung notwendig. Das Ergebnis des Verfahrens sind somit Trennmembranen mit einer hohen Selektivität bzw. Trennschärfe (aufgrund der engen Porengrößenverteilung) sowie einer hohen Flussrate (resultierend aus den geringen Schichtdicken).

Die mit dem Verfahren herstellbare Trennmembran umfasst ein poröses Trägersubstrat und zumindest eine auf dem Trägersubstrat angeordnete trennaktive Schicht. Die erfindungsgemäße Trennmembran zeichnet sich insbesondere durch eine Schichtdicke der trennaktiven Schicht von höchstens 10 µm aus.

Die Flussrate durch die Membran verhält sich umgekehrt proportional zu der Schichtdicke der trennaktiven, aus dem Blockcopolymer gebildeten Schicht. Durch die erfindungsgemäß geringe Schichtdicke wird somit eine hohe Flussrate erzielt. Vorzugsweise beträgt die Schichtdicke der trennaktiven Schicht höchstens 5 µm, insbesondere höchstens 1 µm. Die erfindungsgemäße Trennmembran zeichnet sich ferner durch eine enge Porengrößenverteilung und somit eine hohe Trennschärfe aus.

Die Trennmembran ist vorzugsweise eine Ultra- oder Nanofiltrationsmembran, insbesondere eine Ultrafiltrationsmembran.

Die verschiedenen in dieser Anmeldung genannten Ausführungsformen der Erfindung sind, sofern im Einzelfall nicht anders ausgeführt, mit Vorteil miteinander kombinierbar.

### DETAILLIERTE BESCHREIBUNG DER ERFINDUNG

Die Erfindung wird nachfolgend in Ausführungsbeispielen anhand der zugehörigen Zeichnungen erläutert. Es zeigen:
- Figur 1: REM-Aufnahmen einer erfindungsgemäßen Trennmembran aus Beispiel 1 (trennaktive Schicht: PS-P4VP, Trägersubstrat: PAN-Flachmembran), (a) Oberfläche, (b) und (c) Querbrüche,
- Figur 2: REM-Aufnahme der Oberfläche einer Trennmembran aus Beispiel 2 (trennaktive Schicht: PS-P4VP, Trägersubstrat: kernspurgeätzte PC-Flachmembran),
- Figur 3: REM-Aufnahme der Oberfläche einer Trennmembran aus Beispiel 3 (trennaktive Schicht: PS-P4VP, Trägersubstrat: PVDF-Flachmembran),
- Figur 4: REM-Aufnahme der Oberfläche einer Trennmembran aus Beispiel 4 (trennaktive Schicht: PS-P4VP, Trägersubstrat: PEI-Hohlfadenmembran),
- Figur 5: REM-Aufnahme der Oberfläche einer Trennmembran aus Beispiel 5 (trennaktive Schicht: PS-P4VP, Trägersubstrat: PVDF),
- Figur 6: REM-Aufnahme der Oberfläche einer Trennmembran aus Beispiel 6 (trennaktive Schicht: PS-P4VP, Trägersubstrat: PVDF),
- Figur 7: REM-Aufnahme der Oberfläche einer Trennmembran aus Beispiel 7 (trennaktive Schicht: PS-P4VP, Trägersubstrat: PVDF),
- Figur 8: REM-Aufnahme der Oberfläche einer Trennmembran aus Beispiel 8 (trennaktive Schicht: PS-P4VP, Trägersubstrat: PVDF),
- Figur 9: REM-Aufnahme der Oberfläche einer Trennmembran aus Beispiel 9 (trennaktive Schicht: PS-P4VP, Trägersubstrat: PVDF), und
- Figur 10: REM-Aufnahme der Oberfläche einer Trennmembran aus Beispiel 10 (trennaktive Schicht: α-m PS-P4VP, Trägersubstrat: PVDF).

Das erfindungsgemäße Verfahren zur Herstellung einer Trennmembran umfasst somit die nachfolgend näher ausgeführten Schritte:
- Bereitstellen einer Polymerlösung mindestens eines amphiphilen Blockcopolymers in mindestens einem Lösungsmittel für das Blockcopolymer, wobei die Polymerlösung ein Polymergehalt im Bereich von 0,2 bis 3 Gew.-% aufweist und nur ein einziges Lösungsmittel enthält und das Lösungsmittel Dimethylformamid, Sulfolan, Dimethylacetamid, N-Methylpyrrolidon, Dimethylsulfoxid oder Dioxan ist,
- Ausbilden eines Films aus der Lösung auf einem Trägersubstrat mit einem Verfahren, das ausgewählt ist aus einem Sprühverfahren, einem Druckverfahren und einem auf Kapillareffekten beruhenden Verfahren, und
- Phaseninversion des Films durch Inkontaktbringen des Films mit einem Nicht-Lösungsmittel für das Blockcopolymer, wobei Poren ausgebildet werden und eine auf dem Trägersubstrat angeordnete trennaktive Schicht und somit die Trennmembran erhalten wird, und wobei das Verfahren keinen weiteren Schritt zur Porenerzeugung umfasst.

### Polymerlösung

Die Polymerlösung enthält mindestens ein Blockcopolymer sowie mindestens ein Lösungsmittel für das Blockcopolymer. Gegebenenfalls kann zusätzlich auch ein Nicht-Lösungsmittel enthalten sein.

Das Blockcopolymer kann insbesondere ein Di- oder Triblockcopolymer der Form A-B, A-B-A oder A-B-C sein, wobei die Buchstaben A, B und C Polymerblöcke aus chemisch unterschiedlichen Wiederholungseinheiten darstellen. Dabei können die einzelnen Blocksegmente ihrerseits ein Homopolymer aus lediglich einer Sorte Wiederholungseinheiten oder ein statistisches oder alternierendes Copolymer aus zwei oder mehr unterschiedlichen Wiederholungseinheiten sein.

Geeignete Blöcke des Blockcopolymers sind aus der Gruppe ausgewählt umfassend Polystyrole, Poly(4-vinylpyridin), Poly(2-vinylpyridin), Polybutadien, Polyisopren, Poly(ethylen-*stat*-butylen), Poly(ethylen-*alt*-propylen), Polysiloxane, Polyalkylenoxide, Poly(ε-caprolacton), Polylactid, Polyalkylacrylate, Polyalkylmethacrylate, Polyacrylate, Polymethacrylate, Polymethacrylamide, Polyacrylamide, Polymethacrylamide, Polyacrylsäure, Polymethacrylsäure, Polyhydroxyethylmethacrylat, Poly(N-alkylacrylamid), Polysulfone, Plyethersulfone, Polyaniline, Polypyrrole, Polytriazole, Polyvinylimidazole, Polytetrazole, Polyethylendiamine, Polyvinylalkohole, Polyvinylpyrrolidone, Polyoxadiazole, Polyvinylsulfonsäuren, Polyvinylphosphonsäuren oder Polymere mit quaternären Ammoniumgruppen, sowie Derivate oder Mischungen der vorgenannten Polymerblöcke. Jedoch ist die Erfindung nicht auf die vorstehenden Polymerblöcke beschränkt.

Infrage kommende Blockcopolymere sind solche, die Polymerblöcke enthalten, die in einer Weise unverträglich miteinander sind, dass es während und/oder nach der Filmbildung zu einer partiellen Entmischung der Polymersegmente, das heißt einer Mikroseparierung kommt. Insbesondere handelt es sich bei dem Blockcopolymer um ein amphiphiles Blockcopolymer, das also zumindest einen relativ hydrophilen und zumindest einen relativ lipophilen Polymerblock enthält. Derartige hydrophile und lipophile Blöcke sind etwa in der vorstehenden Liste enthalten. Der Grad der Amphiphilie lässt sich z.B. durch den so genannten HLB-Wert (für hydrophilic-lipophilic balance) oder den segmentalen Wechselwirkungsparameter ausdrücken. Gemäß einer theoretischen Vorhersage für Diblockcopolymere in der Schmelze sollte das Produkt aus segmentalem Wechselwirkungsparameter und Polymerisationsgrad größer als 10,5 sein, um eine Phasenseparation zu bewirken. Für höhere Blockcopolymer ist der Wert größer.

Die Blockcopolymere und die Polymerblöcke weisen vorzugsweise eine geringe Polydispersität auf, insbesondere von höchstens 2, besonders bevorzugt von höchstens 1,5. Dabei bezeichnet die Polydispersität das Verhältnis der gewichtsmittleren Molmasse M_{w} zu der zahlenmittleren Molmasse Mₙ. In den genannten Bereichen werden die Selbstorganisation der Blockcopolymere und die Mikrophasenbildung unterstützt.

Vorzugsweise weist das Blockcopolymer ein gewichtsmittleres Molekulargewicht M_{w} zwischen 25 kDa und 600 kDa, insbesondere zwischen 50 kDa und 250 kDa, auf. In diesem Bereich ist die Porengröße besonders fein einstellbar.

Vorteilhafterweise ist das Gewichtsverhältnis der wenigstens zwei Polymerblöcke des Blockcopolymers relativ zueinander so gewählt, dass eine Selbstorganisation im Lösungsmittel zur Bildung einer sphärischen oder zylindrischen Mizellenstruktur im Lösungsmittel führt. Insbesondere hat sich ein Gewichtsverhältnis zwischen etwa 2:1 und etwa 10:1, insbesondere zwischen etwa 3:2 und 6:1 bewährt. Diese Gewichtsverhältnisse der Majoritätskomponente zur Minoritätskomponente der Blockcopolymere führen zu der gewünschten Mizellenstruktur, also dem Einschluss von einzelnen sphärischen Mizellen der Minoritätskomponente im Bulk der Majoritätskomponente oder zu zylindrischen Mizellenstrukturen, bei denen die Minoritätskomponenten die Zylinder im Bulk der Majoritätskomponente bilden.

Es versteht sich, dass neben dem Blockcopolymer weitere Polymere, insbesondere weitere Blockcopolymere, statistische Copolymere oder Homopolymere zugemischt werden können.

Die erfindungsgemäß eingesetzten Filmbildungstechniken (Sprühen, Drucken, Kapillarverfahren) erlauben die Verwendung sehr verdünnter Polymerlösungen. Es wird eine Polymerlösung mit einem Polymergehalt, insbesondere bezogen auf das Blockcopolymer, im Bereich von 0,2 bis 3 Gew.-%, bevorzugt im Bereich von 0,5 bis 2 Gew.-%, eingesetzt. Sehr gute Resultate wurden mit einem Gehalt von etwa 1 Gew.-% Polymer erzielt. Dass der Erhalt geordneter Membranstrukturen aus derartig verdünnten Lösungen möglich ist, war nicht vorhersehbar und insofern überraschend. Durch die Verwendung sehr niedrig konzentrierter Lösungen reduziert sich zudem die Zubereitungszeit der Polymerlösung, da das Polymer bei geringen Konzentrationen schneller in Lösung geht. Bisher angewandte Ausstreichverfahren benötigen dagegen sehr viel konzentriertere Lösungen, typischerweise von mindestens 15 Gew.-%.

Zur Herstellung der Polymerlösung wird mindestens ein Lösungsmittel für das zumindest eine Blockcopolymer verwendet. Darunter wird verstanden, dass das Polymer zumindest in dem angewendeten Konzentrationsbereich bei Raumtemperatur praktisch vollständig in dem Lösungsmittel löslich ist.

Geeignete Lösungsmittel umfassen Dimethylformamid, Sulfolan, Dimethylacetamid, N-Methylpyrrolidon, Dimethylsulfoxid und Dioxan. Besonders bevorzugt ist Dioxan.

Besonders bevorzugt wird zur Herstellung der Polymerlösung ein einziges Lösungsmittel verwendet. Aufgrund der niedrigen Polymerkonzentrationen ist ein einziges Lösungsmittel ausreichend, um eine vollständige Lösung des Blockcopolymers zu erzielen. Demgegenüber sind bei Verfahren des Standes der Technik, die wesentlich höhere Polymerkonzentrationen erfordern, in der Regel Lösungsmittelgemische notwendig, um die beiden in unterschiedlichen Lösungsmitteln unterschiedlich löslichen Polymerblöcke in Lösung zu bringen. In dem Erfordernis lediglich eines einzigen Lösungsmittels statt der Verwendung von Lösungsmittelgemischen ist ein weiterer Vorteil der Erfindung zu sehen, da hierdurch eine Lösungsmittelaufbereitung und -wiederverwendung wesentlich erleichtert wird.

Die Polymerlösung kann neben dem Blockcopolymer (und ggf. weiteren Polymeren) weitere Bestandteile enthalten. Besonders vorteilhaft sind Additive, welche die Mikrophasenseparierung der Polymerblöcke unterstützen. Hierzu zählen insbesondere wasserstoffbrückenbildende Additive. Wasserstoffbrückenbildende Additive interagieren insbesondere mit hydrophilen Polymerblöcken und führen zu deren Vernetzung. Geeignete wasserstoffbrückenbildende Additive umfassen beispielsweise Kohlenhydrate, organische Moleküle mit funktionellen Gruppen wie -OH, -COOH, -NH₂, und andere. Weitere Additive können Metallionen mit koordinativen (komplexierenden) Eigenschaften sein oder Nanopartikel, insbesondere magnetische Nanopartikel.

### Filmausbildung

Das erfindungsgemäß zum Ausbilden eines Films auf einem Trägersubstrat eingesetzte Verfahren umfasst ein Sprühverfahren, ein Druckverfahren oder ein auf Kapillareffekten beruhendes Verfahren.

Das Sprühverfahren (wahlweise auch als Spritzverfahren bezeichnet) kann beispielsweise unter Verwendung einer Spritzpistole (z.B. Lackier- oder Farbspritzpistole oder Airbrush-Spritzpistole) erfolgen. Beide Vorrichtungen und Techniken sind etabliert und lassen sich ohne Weiteres im großen Maßstab und automatisiert anwenden. In beiden Fällen wird die flüssige Polymerlösung mit einem Gas, insbesondere Luft, Stickstoff oder Argon, unter Ausbildung eines Aerosols fein zerstäubt. Die feinen Tröpfchen lagern sich auf dem Trägermaterial ab und vereinigen sich zu einem dünnen Film. Die Airbrush-Spritzpistole unterscheidet sich von Spritzpistolen im Allgemeinen hauptsächlich durch eine kleinere Dimensionierung bzw. kleinere Tröpfchengröße.

Das auf Kapillareffekten beruhende Verfahren umfasst bevorzugt ein Inkontaktbringen einer Oberfläche des Trägersubstrats mit einer Oberfläche der Lösung unter Ansaugung der Lösung durch das Trägersubstrat. Beispielsweise wird ein poröses Trägersubstrat gerade so dicht über die Polymerlösung gehalten oder geführt, dass es zu einem Ansaugen der Lösung in das Trägersubstrat kommt, ohne das Trägersubstrat jedoch gänzlich zu durchtränken. Nach Entfernen der Lösung bzw. des Substrats verbleibt sodann ein dünner Film der Polymerlösung auf der Oberfläche des Trägersubstrats.

Im Rahmen der vorliegenden Erfindung einsetzbare Druckverfahren zur Erzeugung eines Films der Polymerlösung umfassen jegliche Druckverfahren, die einen kontinuierlichen Flächenauftrag einer niedrig konzentrierten Polymerlösung erlauben. Insbesondere sind hier der Offsetdruck, Siebdruck oder elektronische Piezo- oder thermische Druckverfahren, wie Tintenstrahldruck, zu nennen.

Der Film wird aus der niedrig konzentrierten Polymerlösung mit einem der genannten Verfahren auf ein Trägersubstrat abgeschieden. Dabei ist bevorzugt, dass der Film auf diesem Substrat verbleibt, dieses also integraler Bestandteil des Produkts des Verfahrens ist. Dabei kommt dem Trägersubstrat insbesondere eine stabilisierende Funktion zu. Das Produkt des Verfahrens ist somit eine zumindest zweischichtige Trennmembran, die ein poröses Trägersubstrat sowie eine trennaktive, aus dem Blockpolymer gebildete Schicht aufweist. Dabei kann das Trägersubstrat ein- oder beidseitig mit der trennaktiven Schicht beschichtet werden.

Das Trägermaterial kann eine flächige (ebene) Form aufweisen oder die Form eines Hohlfadens. Somit weist auch das Produkt die Form einer Flachmembran oder Hohlfasermembran (auch Hohlfadenmembran genannt) auf.

Vorzugsweise handelt es sich bei dem Trägersubstrat um ein Material mit einer offenen Porenstruktur, insbesondere einer mesoporösen oder makroporösen Porenstruktur. Mesoporöse Körper weisen definitionsgemäß Porendurchmesser im Bereich von 2 bis 50 nm auf, während makroporöse Körper einen Porendurchmesser größer als 50 nm besitzen.

Aus materieller Hinsicht kommen für das Trägersubstrat keramische, metallische oder polymere Materialien in Frage, wobei Polymermaterialien bevorzugt sind. Beispiele für geeignete polymere Materialien für das Trägersubstrat umfassen Polyvinylidenfluorid (PVDF), Polyetherimid (PEI), Polyacrylnitrid (PAN), Polyethylen (PE) und andere.

### Phaseninversion

Nach dem Ausbilden eines Films aus der Polymerlösung auf dem Trägersubstrat erfolgt eine Phaseninversion. Im Wege der Phaseninversion erfolgt eine Neuorientierung der zuvor ausgebildeten Mikrophasen, wobei das Polymer präzipitiert, das heißt ausfällt. In diesem Schritt geht der zuvor abgeschiedene und noch flüssige Film in die feste Phase über. Gleichzeitig bilden sich Poren aus.

In der Erfindung erfolgt die Phaseninversion durch Inkontaktbringen des zuvor ausgebildeten Films mit einem Nicht-Lösungsmittel für das Blockcopolymer. Wenn beispielsweise das Blockcopolymer zuvor in einem vergleichsweise unpolaren Lösungsmittel gelöst war, so dass eher lipophile Polymerblöcke des Blockcopolymers sich auf der äußeren Schicht der in der Lösung gebildeten Mizellen angeordnet hatten, so werden in einem eher polaren Lösungsmittel, das ein Nicht-Lösungsmittel für das Blockcopolymer darstellt, die lipophilen Blöcke versuchen, sich ins Innere der Mizellen und die stärker polaren Blöcke sich nach außen umzulagern. Wenn jedoch die polaren Blöcke als Minderkomponente im Blockcopolymer vorliegen, reicht ihr Anteil nicht aus, um das Polymer in Lösung zu halten und es kommt zu einem Ausfällen des Polymers. Die Phaseninversion in einem Nicht-Lösungsmittel kann in einfacher Weise erfolgen, indem das Trägersubstrat, auf dem der flüssige Polymerfilm abgeschieden ist, in das Nicht-Lösungsmittel für das Blockcopolymer eingetaucht wird oder das Trägersubstrat mit dem Nicht-Lösungsmittel besprüht oder übergossen wird.

### Trennmembran

Die Trennmembran umfasst ein poröses Trägersubstrat und zumindest eine auf dem Trägersubstrat angeordnete trennaktive Schicht, hergestellt oder herstellbar nach dem erfindungsgemäßen Verfahren. Die erfindungsgemäße Trennmembran zeichnet sich insbesondere durch eine Schichtdicke der trennaktiven Schicht von höchstens 10 µm aus. Wie bereits ausgeführt wurde, verhält sich die Flussrate durch die Membran umgekehrt proportional zu der Schichtdicke der trennaktiven, aus dem Blockcopolymer gebildeten Schicht. Durch die erfindungsgemäß geringe Schichtdicke wird somit eine hohe Flussrate erzielt. Vorzugsweise beträgt die Schichtdicke der trennaktiven Schicht höchstens 1 µm .

Die trennaktive Schicht weist vorzugsweise eine mittlere Porengröße im Bereich von 1 bis 100 nm, insbesondere im Bereich von 5 bis 80nm, auf. Damit ist die erfindungsgemäße Trennmembran als Nano- oder Ultrafiltrationsmembran einzuordnen, insbesondere als Ultrafiltrationsmembran. Definitionsgemäß weisen Ultrafiltrationsmembranen eine Ausschlussgrenze (Cutt-off) im Bereich von 2 bis 100 nm auf.

Die Trennmembran zeichnet sich ferner durch eine geringe Porengrößenverteilung aus. Insbesondere weisen mindestens 75%, insbesondere mindestens 80%, vorzugsweise mindestens 90%, der Poren der trennaktiven Schicht eine Porengröße auf, die um höchstens ±15% von einem mittleren Porendurchmesser abweichen. Durch die enge Porengrößenverteilung wird eine besonders gute Trennschärfe erzielt, das heißt ein besonders gut definierter so genannter Cut-off der Trennmembran.

### BEISPIELE

### Materialien

**Blockcopolymer**

| | |
|---|---|
| PS₈₃-P4VP₁₇ 88k: | Poly(styrol-*block*-4-vinylpyridin), A-B-Blockcopolymer, M_{W} = 88 kDa, w(PS) = 83 Gew.-%, w(P4VP) = 17 Gew.-% |
| PS_{86.5}-P4VP_{13.5} 150k | Poly(styrol-*block*-4-vinylpyridin), A-B-Blockcopolymer, M_{W} = 150 kDa, w(PS) = 86,5 Gew.-%, w(P4VP) = 13,5 Gew.-% |
| PS₇₉-P4VP₂₁ 190k | Poly(styrol-*block*-4-vinylpyridin), A-B-Blockcopolymer, M_{W} = 190 kDa, w(PS) = 79 Gew.-%, w(P4VP) = 21 Gew.-% |
| PS₈₁-P4VP₁₉ 160k | Poly(styrol-*block*-4-vinylpyridin), A-B-Blockcopolymer, M_{W} = 160 kDa, w(PS) = 81 Gew.-%, w(P4VP) = 19 Gew.-% |
| PS₇₆-P4VP₂₄ 197k | Poly(styrol-*block*-4-vinylpyridin), A-B-Blockcopolymer, M_{W} = 197 kDa, w(PS) = 76 Gew.-%, w(P4VP) = 24 Gew.-% |
| α-m PS_{79.1}-P4VP_{21.9} 91 k | Poly(alpha-methylstyrol-*block*-4-vinylpyridin), A-B-Blockcopolymer, M_{W} = 91 kDa, w(PS) = 79,1 Gew.-%, w(P4VP) = 21,9 Gew.-% |

### Trägersubstrat

- PAN-Membran: Polyacrylnitril-Flachmembran
- PC-Membran: kernspurgeätzte Polycarbonat-Flachmembran
- PVDF-Membran: Polyvinylidenfluorid-Flachmembran
- PEI-Hohlfaden: Polyetherimid-Hohlfadenmembran?

### Beispiel 1

Es wurde eine Polymerlösung mit einem Polymeranteil von 1 Gew.-% des A-B-Blockcopolymers PS₈₃-P4VP₁₇ 88k in Dioxan hergestellt. Die Herstellung erfolgte durch Mischen des Polymers und des Lösungsmittels unter Rühren, bis sich das Polymer vollständig aufgelöst hatte. Anschließend wurde die Polymerlösung auf eine PAN-Flachmembran als poröses Trägersubstrat aufgesprüht, wofür eine Dünnschichtchromatographie(DC)-Sprühflasche verwendet wurde und ein Sprühabstand zwischen der Sprühdüse und der Oberfläche des Trägers von 5 cm eingehalten wurde.

Unmittelbar im Anschluss daran wurde das besprühte Trägersubstrat in ein Phaseninversionsbad aus deionisiertem Wasser bei 20 °C kurz eingetaucht und anschließend getrocknet.

### Beispiele 2-10

Die Herstellung erfolgte wie in Beispiel 1 jedoch gemäß den in Tabelle 1 zusammengefassten Parametern.

**Tabelle 1:**

| | **Polymer¹** | **w (%)** | **LM** | **Träger** | **Filmherstellung** | | | **Fällung** | |
|---|---|---|---|---|---|---|---|---|---|
| | | | | | **Auftragungs methode** | **d (cm)** | **p (bar)** | **LM** | **T (°C)** |
| 1 | PS₈₃-P4VP₁₇ 88k | 1 | Dioxan | PAN-Membran | Sprühen, DC-Sprühflasche | 5 | - | H₂O | 20 |
| 2 | PS₈₃-P4VP₁₇ 88k | 5 | Dioxan | PC-Membran, kernspurgeätzt | Sprühen, DC-Sprühflasche | 10 | - | H₂O | 20 |
| 3 | PS₈₃-P4VP₁₇ 88k | 1 | Dioxan | PVDF-Membran | Sprühen, Airbrush | 10 | 0,3 | H₂O | 20 |
| 4 | PS₈₃-P4VP₁₇ 88k | 1 | Dioxan | PEI-Hohlfaden | Sprühen, DC-Sprühflasche | 10 | - | H₂O | 20 |
| 5 | PS_{86.5}-P4VP_{13.5} 150k | 1 | Dioxan | PVDF | Sprühen, Airbrush | 15 | 1 | H₂O | 20 |
| 6 | PS₈₃-P4VP₁₇ 88k | 1 | Dioxan | PVDF | Sprühen, Airbrush | 10 | 0,3 | H₂O | 20 |
| 7 | PS₇₉-P4VP₂₁ 190k | 1 | Dioxan | PVDF | Sprühen, Airbrush | 10 | 0,3 | H₂O | 20 |
| 8 | PS₈₁-P4VP₁₉ 160k | 1 | Dioxan | PVDF | Sprühen, Airbrush | 10 | 1 | H₂O | 20 |
| 9 | PS₇₆-P4VP₂₄ 197k | 1 | Dioxan | PVDF | Sprühen, Airbrush | 10 | 1 | H₂O | 20 |
| 10 | α-m PS_{79.1}-P4VP_{21.9} 91 k | 1 | Dioxan | PVDF | Sprühen, Airbrush | 15 | 1 | H₂O | 20 |

| | | | | | | | | | |
|---|---|---|---|---|---|---|---|---|---|
| tiefgestellte Indizes bezeichnen den Massenanteil des jeweiligen Polymerblocks des Blockcopolymers, nachgestellte Angabe bezeichnet die mittlere Molmasse des Blockcopolymers Mₙ in kDa, | | | | | | | | | |

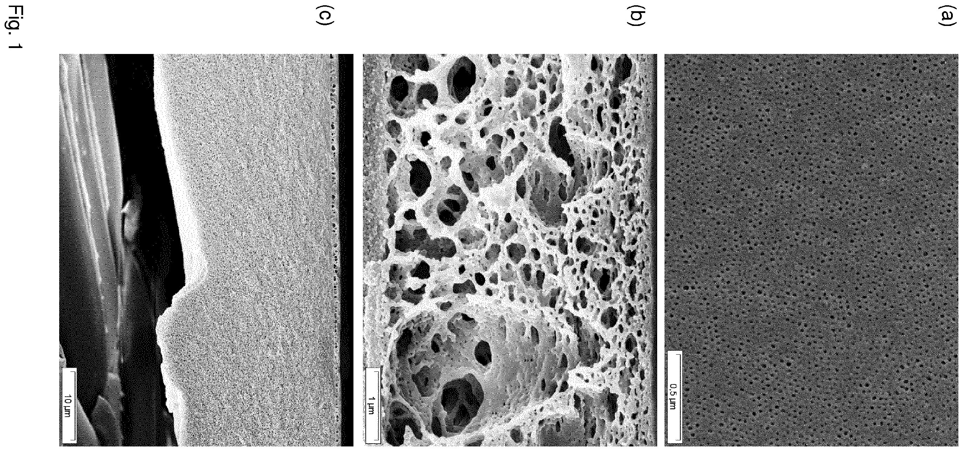

Die Figur 1 a-c zeigt rasterelektronenmikroskopische Aufnahmen der Oberflächen der gemäß Beispiel 1 hergestellten Trennmembran. Die Oberflächenansicht der trennaktiven Schicht des Blockcopolymers Poly(styrol-*block*-4-vinylpyridin) lässt eine gleichmäßige Porenstruktur mit einer engen Porengrößenverteilung erkennen. Die Querbruchansichten in Fig. B und c zeigen zudem die makroporöse Struktur des PAN-Trägersubstrats.

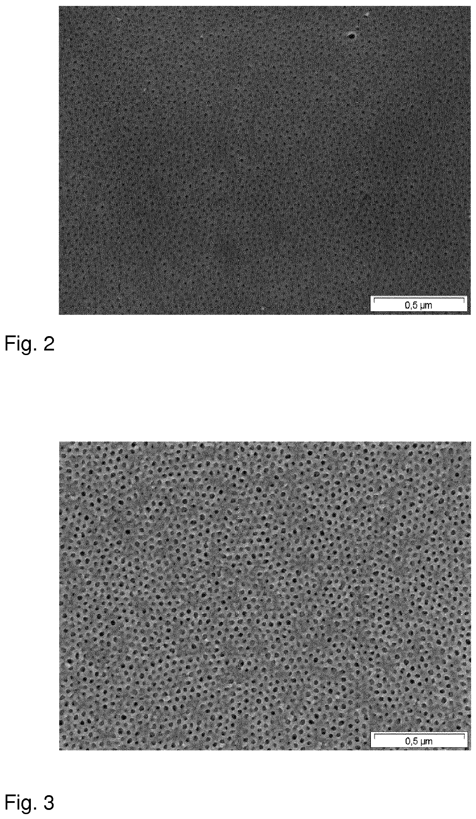

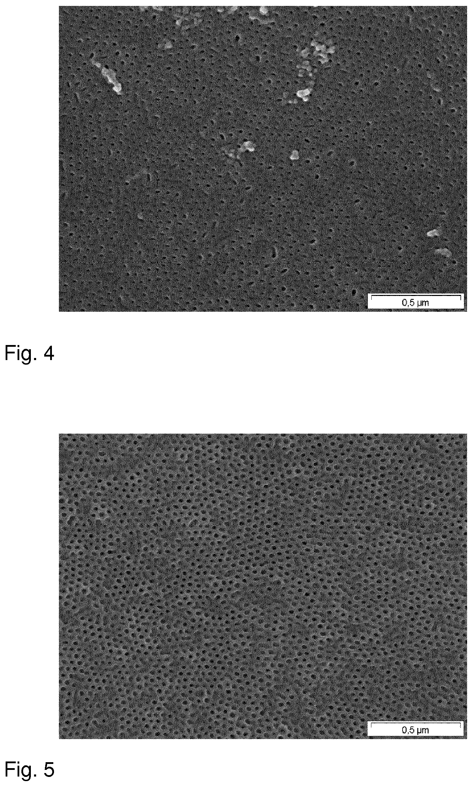

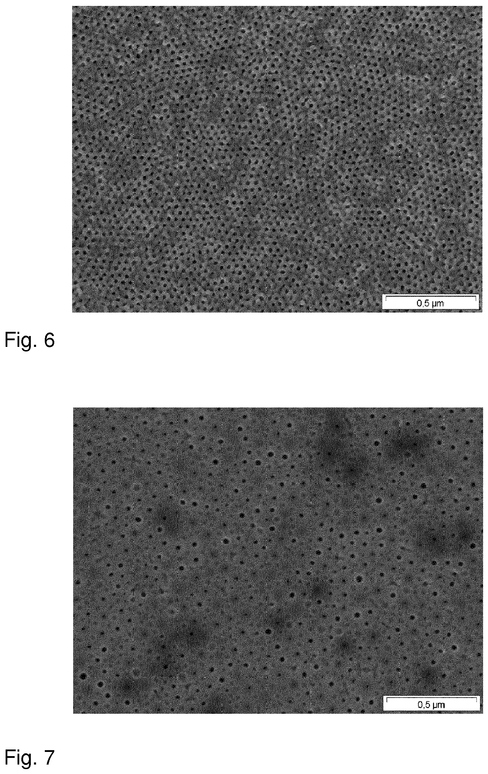

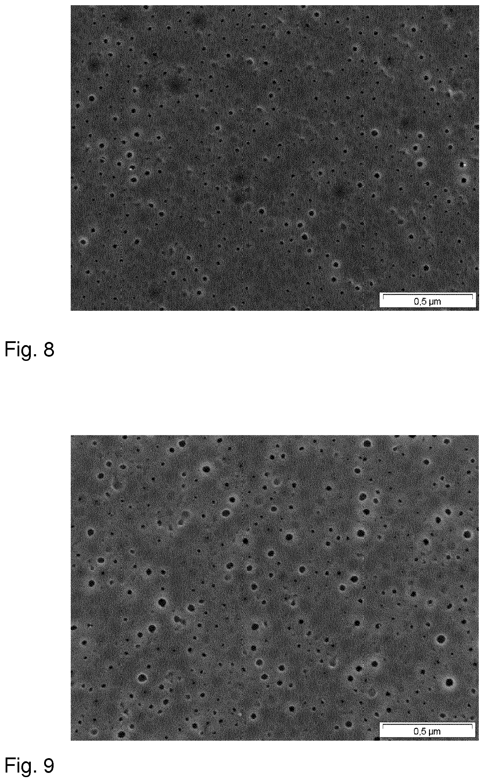

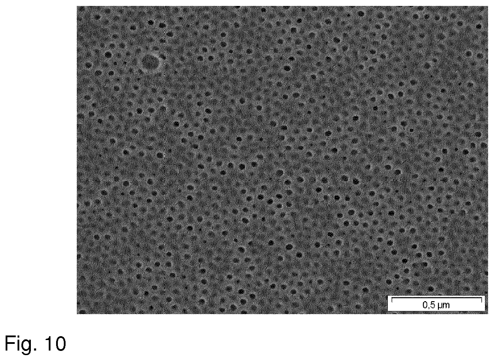

Entsprechende REM-Oberflächenansichten der nach den Beispielen 2 bis 10 hergestellten Trennmembranen sind in den Figuren 2-10 dargestellt.

## Patentansprüche

1. Verfahren zur Herstellung einer Trennmembran umfassend die Schritte:
- Bereitstellen einer Polymerlösung mindestens eines amphiphilen Blockcopolymers in einem Lösungsmittel für das Blockcopolymer, wobei die Polymerlösung ein Polymergehalt im Bereich von 0,2 bis 3 Gew.-% aufweist und nur ein einziges Lösungsmittel enthält und das Lösungsmittel Dimethylformamid, Sulfolan, Dimethylacetamid, N-Methylpyrrolidon, Dimethylsulfoxid oder Dioxan ist,
- Ausbilden eines Films aus der Polymerlösung auf einem Trägersubstrat, wobei das Ausbilden des Films durch ein Sprühverfahren, ein Druckverfahren oder ein auf Kapillareffekten beruhendes Verfahren erfolgt, und
- Phaseninversion des Films durch Inkontaktbringen des Films mit einem Nicht-Lösungsmittel für das Blockcopolymer, wobei Poren ausgebildet werden und eine auf dem Trägersubstrat angeordnete trennaktive Schicht erhalten wird, und wobei das Verfahren keinen weiteren Schritt zur Porenerzeugung umfasst.

2. Verfahren nach Anspruch 1, **dadurch gekennzeichnet, dass** die Polymerlösung ein Polymergehalt, insbesondere des Blockcopolymers, im Bereich von 0,5 bis 2 Gew.-%, aufweist.

3. Verfahren nach Anspruch 1 oder 2, **dadurch gekennzeichnet, dass** das Sprühverfahren unter Verwendung einer Spritzpistole oder einer Airbrush-Spritzpistole erfolgt.

4. Verfahren nach Anspruch 1 oder 2, **dadurch gekennzeichnet, dass** das auf Kapillareffekten beruhende Verfahren ein Inkontaktbringen einer Oberfläche des Trägersubstrats mit einer Oberfläche der Lösung unter Ansaugung der Lösung durch das Trägersubstrat umfasst.

5. Verfahren nach Anspruch 1 oder 2, **dadurch gekennzeichnet, dass** das Druckverfahren ein Offsetdruckverfahren, ein Siebdruckverfahren oder ein Piezo- oder thermisches elektronisches Druckverfahren umfasst.

6. Verfahren nach einem der vorhergehenden Ansprüche, **dadurch gekennzeichnet, dass** das Blockcopolymer ein Di- oder Triblockpolymer der Form A-B, A-B-A oder A-B-C ist.

7. Verfahren nach einem der vorhergehenden Ansprüche, **dadurch gekennzeichnet, dass** die Polymerlösung als Lösungsmittel Dioxan umfasst.

8. Verfahren nach einem der vorhergehenden Ansprüche, **dadurch gekennzeichnet, dass** die Polymerlösung ferner ein komplexierendes oder wasserstoffbrückenbildendes Additiv enthält.

9. Verfahren nach einem der vorhergehenden Ansprüche, **dadurch gekennzeichnet, dass** eine Schichtdicke der trennaktiven Schicht höchstens 10 µm, insbesondere höchstens 5 µm, vorzugsweise höchstens 1 µm, beträgt.

10. Verfahren nach einem der vorhergehenden Ansprüche, **dadurch gekennzeichnet, dass** die trennaktive Schicht eine mittlere Porengröße im Bereich von 1 bis 100 nm, insbesondere im Bereich von 5 bis 80 nm, aufweist.

11. Verfahren nach einem der vorhergehenden Ansprüche, **dadurch gekennzeichnet, dass** mindestens 75%, insbesondere mindestens 80%, vorzugsweise mindestens 90%, der Poren der trennaktiven Schicht eine Porengröße aufweisen, die um höchstens ±15% von einem mittleren Porendurchmesser abweichen.

## Claims

1. A method for producing a separating membrane, comprising the steps of:
- providing a polymer solution of at least one amphiphilic block copolymer in a solvent for the block copolymer, wherein the polymer solution has a polymer content in the range of 0.2 to 3 wt% and contains just one single solvent, and the solvent is dimethyl formamide, sulfolane, dimethyl acetamide, N-methyl pyrrolidone, dimethyl sulfoxide or dioxane,
- forming a film from the polymer solution on a carrier substrate, wherein the forming of the film is conducted using a spray method, a printing method or a method based on capillary effects, and
- phase inversion of the film by bringing the film into contact with a non-solvent for the block copolymer, wherein pores are formed and an active separating layer arranged on the carrier substrate is obtained, and wherein the method comprises no further step for producing pores.

2. The method according to Claim 1, **characterized in that** the polymer solution has a polymer content, in particular of the block copolymer, in the range of 0.5 to 2 wt%.

3. The method according to Claim 1 or 2, **characterized in that** the spray method is conducted using a spray gun or an airbrush spray gun.

4. The method according to Claim 1 or 2, **characterized in that** the method based on capillary effects comprises bringing into contact a surface of the carrier substrate with a surface of the solution and sucking in of the solution by the carrier substrate.

5. The method according to Claim 1 or 2, **characterized in that** the printing method comprises an offset printing method, a screen printing method or a piezo or thermal electronic printing method.

6. The method according to any one of the preceding claims, **characterized in that** the block copolymer is a di- or triblock polymer with an A-B, A-B-A or A-B-C form.

7. The method according to any one of the preceding claims, **characterized in that** the polymer solution comprises dioxane as a solvent.

8. The method according to any one of the preceding claims, **characterized in that** the polymer solution further contains a complexing or hydrogen bond-forming additive.

9. The method according to any one of the preceding claims, **characterized in that** a layer thickness of the active separating layer is at most 10 µm, in particular at most 5 µm, preferably at most 1 µm.

10. The method according to any one of the preceding claims, **characterized in that** the active separating layer has an average pore size in the range of 1 to 100 nm, in particular in the range of 5 to 80 nm.

11. The method according to any one of the preceding claims, **characterized in that** at least 75%, in particular at least 80%, preferably at least 90%, of the pores of the active separating layer have a pore size that deviates by at most ±15% from an average pore diameter.

## Revendications

1. Procédé de fabrication d'une membrane de séparation comprenant les étapes suivantes :
- la fourniture d'une solution de polymère d'au moins un copolymère à blocs amphiphile dans un solvant du copolymère à blocs, dans lequel la solution de polymère présente une teneur en polymère située dans la plage de 0,2 à 3 % en poids et ne contient qu'un seul solvant et le solvant est du diméthylformamide, du sulfolane, du diméthylacétamide, de la N-méthylpyrrolidone, du diméthylsulfoxide ou du dioxane,
- la formation d'un film à partir de la solution de polymère sur un substrat porteur, dans lequel la formation du film est réalisée par un procédé de pulvérisation, par un procédé d'impression ou par un procédé reposant sur des effets de capillarité, et
- l'inversion de phase du film par la mise en contact du film avec un non-solvant du copolymère à blocs, dans lequel des pores sont formés et une couche séparatrice active, disposée sur le substrat porteur est obtenue, et dans lequel le procédé ne comprend aucune autre étape pour générer des pores.

2. Procédé selon la revendication 1, **caractérisé en ce que** la solution de polymère présente une teneur en polymère, notamment du copolymère à blocs, située dans la plage de 0,5 à 2 % en poids.

3. Procédé selon la revendication 1 ou 2, **caractérisé en ce que** le procédé de pulvérisation s'effectue au moyen d'un pistolet pulvérisateur ou d'un pistolet pulvérisateur aérographe.

4. Procédé selon la revendication 1 ou 2, **caractérisé en ce que** le procédé reposant sur des effets de capillarité comporte la mise en contact d'une surface du substrat porteur avec une surface de la solution moyennant l'aspiration de la solution par le substrat porteur.

5. Procédé selon la revendication 1 ou 2, **caractérisé en ce que** le procédé d'impression comporte un procédé d'impression offset, un procédé de sérigraphie ou un procédé d'impression piézoélectrique ou thermoélectronique.

6. Procédé selon l'une des revendications précédentes, **caractérisé en ce que** le copolymère à blocs est un polymère dibloc ou tribloc de la forme A-B, A-B-A ou A-B-C.

7. Procédé selon l'une des revendications précédentes, **caractérisé en ce que** la solution de polymère comporte du dioxane comme solvant.

8. Procédé selon l'une des revendications précédentes, **caractérisé en ce que** la solution de polymère contient encore un additif complexant ou formant des ponts hydrogène.

9. Procédé selon l'une des revendications précédentes, **caractérisé en ce qu'**une épaisseur de la couche séparatrice active atteint au plus 10 µm, notamment au plus 5 µm, de préférence au plus 1 µm.

10. Procédé selon l'une des revendications précédentes, **caractérisé en ce que** la couche séparatrice active présente une grosseur de pore moyenne dans la plage de 1 à 100 nm, notamment dans la plage de 5 à 80 nm.

11. Procédé selon l'une des revendications précédentes, **caractérisé en ce qu'**au moins 75 %, notamment au moins 80 %, de préférence au moins 90 %, des pores de la couche séparatrice active présentent une grosseur de pore divergeant d'un diamètre de pore moyen de ±15 % au maximum.
